# EUROPÄISCHE PATENTSCHRIFT

(11) **EP 2 114 082 B1**
(45) Veröffentlichungstag und Bekanntmachung des Hinweises auf die Patenterteilung: **04.11.2015**
(21) Anmeldenummer: 08008187.0
(22) Anmeldetag: 29.04.2008
(51) Int. Cl.: H04Q 9/00

(54) **Sensor und/oder Aktor mit Mitteln zur energieeffizienten drahtlosen Kommunikation von Daten**
Sensor and/or actuator capable of energy efficient wireless communication of files
Capteur et/ou acteur doté de moyens de communication de données sans fil à efficience énergétique

(43) Veröffentlichungstag der Anmeldung: 04.11.2009
(73) Patentinhaber: Siemens Aktiengesellschaft, 80333 München (DE)
(72) Erfinder: Lahner, Frank, 92224 Amberg (DE); Unger, Nils, 13439 Berlin (DE)

(56) Entgegenhaltungen:
- US-A1- 2002 155 832
- US-A1- 2005 079 880
- US-A1- 2006 223 516

## Beschreibung

Die Erfindung betrifft einen Sensor und/oder Aktor mit Mitteln zur drahtlosen Kommunikation von Daten.

Ein solcher Sensor und/oder Aktor mit drahtloser Kommunikation hat üblicherweise eine autarke Energieversorgung, das heißt eine Batterie, eine Solarzelle, einen Mikrogenerator oder ähnliches ist vorgesehen, um den Energiebedarf zu decken. Um den Energieverbrauch im Hinblick auf eine möglichst lange Lebensdauer zu minimieren, werden sparsame Mikrocontroller eingesetzt. Der weitaus größte Energieverbrauch wird von dem für die Kommunikation erforderlichen Transceiver benötigt. Auch wenn dieser nur für die Zeitdauer der Übertragung der Ereignisse eingeschaltet wird, so ist sowohl die Stromaufnahme als auch die benötigte Zeitdauer zur Messung und Übertragung um ein Vielfaches größer als beim Sensorelement inklusive Signalauswertung des Sensors.

Aus der Druckschrift US 2006/0223516 A1 - Fan et al. "Remotely Configurable Mobile Unit" ist eine Anordnung mit drahtlos angebundenen mobilen Geräten bekannt, bei der vor einer Datenübertragung eines der mobile Geräte zu einer Basis eine Konfigurationsdatei von einer Konfigurations-Datenbank zu dem jeweiligen mobilen Gerät übermittelt wird, wobei in der Konfigurationsdatei die zu übermittelnden Daten definiert sind.

Auch die Druckschrift US 2002/0155832 A1 - Stucky et al. "Wireless Telemetry System" zeigt eine funkbasierte Anordnung, bei der von einem mobilen Gerät Daten zu einer Basisstation übermittelt werden. Dabei ist ein sog. "Alarm-Modus" bekannt, während dem überhaupt keine Nutzdaten übertragen werden. Zudem kann die Häufigkeit wiederholter Datenübertragungen über ein Datenfeld "frequency of regulary scheduled transmissions" gesteuert werden.

Der Erfindung liegt die Aufgabe zu Grunde, einen Sensor und/oder Aktor der oben genannten Art dahingehend zu verbessern, dass sein Energieverbrauch bedarfsgerecht veränderbar ist.

Die Aufgabe wird durch einen Sensor und/oder Aktor mit den Merkmalen nach Anspruch 1 gelöst.

Diese Lösung hat den Vorteil, dass bedarfsgerecht ein Datenprofil mit den Daten auswählbar ist, die für den Anwender von Interesse sind oder zum Beispiel für Steuerungen von Prozessabläufen nötig sind. Die Beschränkung auf die Kommunikation von Daten einer Untermenge aller Daten verringert dementsprechend den erforderlichen Energieverbrauch.

Vorteilhafte Weiterbildungen der Erfindung sind den Unteransprüchen 2 bis 7 zu entnehmen.

Es ist besonders vorteilhaft, wenn gemäß Anspruch 2 Mittel zur Erfassung eines Zustandswechsels innerhalb des Sensors und/oder Aktors vorgesehen sind und wenn der Zustandswechsel als Datum innerhalb eines der Datenprofile zur drahtlosen Kommunikation vorgesehen ist. Ein Zustandswechsel kann zum Beispiel der Wechsel des Schaltzustands bei einem Schaltgerät von Aus auf Ein oder umgekehrt sein, der durch entsprechende Wechsel zum Beispiel eines Spannungspegels von HIGH auf LOW und umgekehrt wiedergegeben werden kann. Zur Information genügt der Zustandswechsel EIN-AUS oder AUS-EIN, der durch Übertragung eines entsprechenden Datums übermittelt werden kann. Damit erübrigt es sich also, ständig die Information über den momentanen Zustand zu übermitteln, was erheblich mehr Energie verbrauchen würde.

Außerdem ist es vorteilhaft, wenn zur Auswahl eines Datenprofils die Eingabe eines Parameters vorgesehen ist.

Eine weitere vorteilhafte Ausgestaltung der Erfindung besteht, wenn der Sensor und/oder Aktor Mittel zur Erfassung des Zustands des Sensors und/oder Aktors aufweist und wenn dieser erfasste Zustand als Datum innerhalb eines der Datenprofile zur drahtlosen Kommunikation vorgesehen ist.

Weist der Sensor und/oder Aktor gemäß Anspruch 5 Mittel zum Empfang von Daten auf, die einzeln oder zusammen direkt oder nach Verarbeitung als Daten innerhalb zumindest eines der Datenprofile vorgesehen sind, so ermöglicht dies, dass der Sensor und/oder Aktor über einen Datenaustausch erfasste Daten an andere Teilnehmer eines Netzwerks über- mittelt.

Beim Einsatz eines Sensors und/oder Aktors in einem Prozess, ist es zur Optimierung des Energieverbrauchs von besonderem Vorteil, wenn gemäß Anspruch 6 eine Folge von mehreren Datenprofilen wählbar ist.

Zusätzlich ist es vorteilhaft, wenn gemäß Anspruch 7 die Dauer der Datenprofile individuell veränderbar ist.

Erfindungsgemäß weist der Sensor und/oder Aktor eine Steuereinheit auf, durch die das für die Kommunikation anzuwendende Datenprofil im Betrieb auswählbar und/oder veränderbar ist.

Ein Ausführungsbeispiel der Erfindung wird im Folgenden anhand einer Zeichnung näher erläutert.

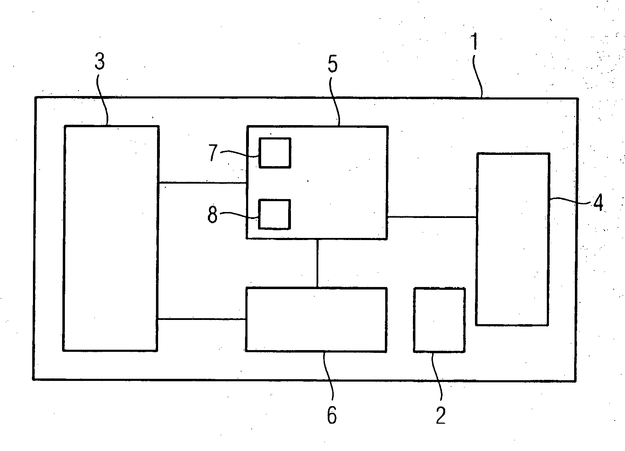

In der Figur ist ein Sensor/Aktor 1 mit einer autarken Energieversorgung 2 dargestellt, der über eine drahtlose Kommunikation mit anderen Teilnehmern eines Netzwerkes Daten austauschen kann. Hierzu weist der Sensor/Aktor 1 Mittel 3 zur drahtlosen Kommunikation, zum Beispiel einen Transceiver auf, über den der Datenaustausch erfolgt. Der Sensor/Aktor 1 weist außerdem ein Sensorelement 4 zum drahtlosen oder drahtgebündenen Empfang von Signalen auf. Abhängig vom Sensorelement 4 kann der Sensor 1 als Näherungsschalter, zum Beispiel als induktiver, optischer Näherungsschalter oder Ultraschall-Näherungsschalter ausgeführt sein. Ebenso kann der Aktor 1 neben seiner Hauptfunktion als Steuerglied in einem Prozess zusätzlich mittels des Sensorelements 4 z.B. einen Umgebungszustand erfassen, um hiervon abhängig eine Steuerfunktion auszuführen.

Der Sensor/Aktor 1 weist außerdem eine Steuereinheit 5, z.B. einen Mikrocomputer, auf, der sowohl mit den Mitteln 3 zur drahtlosen Kommunikation sowie mit dem Sensorelement 4 in Verbindung steht und von diesen Komponenten Daten zur Auswertung beziehungsweise Weiterverarbeitung erhält.

Weiterhin umfasst der Sensor/Aktor 1 einen Speicher 6, in dem verschiedene Datenprofile abgespeichert sind. Durch die Datenprofile ist die jeweilige Untermenge von Daten definiert, die im Betrieb über die drahtlose Kommunikation kommuniziert werden sollen. Das jeweils anzuwendende Datenprofil ist zum Beispiel vom Anwender durch Eingabe eines Parameters wählbar, kann aber auch durch die Steuereinheit 5, zum Beispiel ereignisgesteuert, vorgegeben werden. Als Daten werden hier alle möglichen im Sensor/Aktor 1 verfügbaren Informationen beziehungsweise Ereignisse angesehen, z.B. Zustände, Zustandswechsel, vom Sensorelement 4 erfasste Daten, von anderen Teilneh-, mern in einem Netzwerk empfangene Daten und hieraus abgeleitete Ergebnisse etc. Es ist nicht erforderlich, in jedem Fall alle diese Daten über die Mittel 3 zur drahtlosen Kommunikation auszusenden, was einen hohen Energieverbrauch zur Folge hätte und damit die Lebensdauer des Sensors/Aktors 1 aufgrund der beschränkten Energieversorgung verkürzen würde.

Bei drahtgebundenen Sensoren ist es bisher üblich, die Schaltzustände EIN und AUS durch entsprechende Signalpegel HIGH und LOW auszugeben. Allerdings würde es für die Information des Schaltzustands genügen, den Schaltzustandswechsel, zum Beispiel EIN-AUS oder AUS-EIN durch entsprechende Daten zu übermitteln. Damit könnte die Datenübermittlung und damit der Energieverbrauch erheblich reduziert werden.

Der Sensor/Aktor 1 weist daher vorteilhafter Weise neben Mitteln 7 zur Erfassung des Zustands auch Mittel 8 zur Erfassung des Zustandswechsels auf, um diese Information bei Vorgabe durch ein Datenprofil über die drahtlose Kommunikation zu übermitteln.

Beim Einsatz des Sensors/Aktors 1 in einem Prozess kann das Datenprofil zum Beispiel abhängig vom Prozessablauf oder von Daten, die vom Sensorelement erfasst werden, zum Beispiel durch die Steuereinheit 5 vorgegeben oder abgeändert werden. Außerdem ist vorgesehen, dass eine Folge von Datenprofilen auswählbar ist, um anderen Teilnehmern eines Netzwerks die erforderlichen Informationen zur Verfügung zu stellen. Zusätzlich kann dabei auch vorgegeben werden können, für welche Dauer die Datenprofile anzuwenden sind.

Mit dem beschriebenen, erfindungsgemäßen Sensor/Aktor 1 lassen sich damit die Anforderungen herkömmlicher, drahtgebundener Näherungsschalter erfüllen, die meist eine kleine Bauform aufweisen und hohe Schaltfrequenzen unterstützen.

## Patentansprüche

1. Sensor und/oder Aktor (1) mit Mitteln (3)zur drahtlosen Kommunikation von Daten,
wobei der Sensor und/oder Aktor (1) eine Energieversorgung (2) mit beschränktem Energievorrat aufweist,
wobei der Sensor und/oder Aktor (1) zur Abspeicherung mehrerer unterschiedlicher Datenprofile eingerichtet ist, durch die jeweils eine Untermenge der Daten definiert ist, und wobei das gewünschte Datenprofil wählbar ist, so dass nur die Daten dieser gewählten Untermenge durch die Mittel (3)zur drahtlosen Kommunikation beim Betrieb innerhalb eines Netzwerks versendet werden
**dadurch gekennzeichnet,**
**dass** der Sensor und/oder Aktor (1) eine Steuereinheit (5) aufweist, durch die das für die Kommunikation anzuwendende Datenprofil im Betrieb auswählbar und/oder veränderbar ist, und
**dass** das Datenprofil abhängig von Daten, die von einem Sensorelement erfasst werden, durch die Steuereinheit vorgegeben oder abgeändert wird.

2. Sensor und/oder Aktor nach Anspruch 1, **dadurch gekennzeichnet, dass** Mittel zur Erfassung eines Zustandswechsels innerhalb des Sensors und/oder Aktors (1) vorgesehen sind und dass der Zustandswechsel als Datum innerhalb eines der Datenprofile zur drahtlosen Kommunikation vorgesehen ist.

3. Sensor und/oder Aktor nach Anspruch 1 oder 2, **dadurch gekennzeichnet, dass** zur Auswahl eines der Datenprofile die Eingabe eines Parameters vorgesehen ist.

4. Sensor und/oder Aktor nach einem der vorangehenden Ansprüche, **dadurch gekennzeichnet, dass** dieser Mittel (7) zur Erfassung des Zustands des Sensors und/oder Aktors aufweist und dass dieser erfasste Zustand als Datum innerhalb eines der Datenprofile zur drahtlosen Kommunikation vorgesehen ist.

5. Sensor und/oder Aktor nach einem der vorangehenden Ansprüche, **dadurch gekennzeichnet, dass** dieser Mittel(8) zum Empfang von Daten aufweist, die einzeln oder zusammen direkt oder nach Verarbeitung als Daten innerhalb zumindest eines der Datenprofile vorgesehen sind.

6. Sensor und/oder Aktor nach einem der vorangehenden Ansprüche, **dadurch gekennzeichnet, dass** eine Folge von mehreren Datenprofilen wählbar ist.

7. Sensor und/oder Aktor nach einem der vorangehenden Ansprüche, **dadurch gekennzeichnet, dass** die Dauer mindestens eines der Datenprofile individuell veränderbar ist.

## Claims

1. Sensor and/or actuator (1) having means (3) for wirelessly communicating data,
the sensor and/or actuator (1) having an energy supply (2) with a limited energy reserve,
the sensor and/or actuator (1) being set up to store a plurality of different data profiles each defining a subset of the data, and the desired data profile being able to be selected, with the result that only the data in this selected subset are transmitted by the means (3) for wireless communication during operation inside a network,
**characterized in that**
the sensor and/or actuator (1) has a control unit (5) which can be used to select and/or change the data profile to be used for communication during operation, and
**in that** the data profile is predefined or modified by the control unit on the basis of data acquired by a sensor element.

2. Sensor and/or actuator according to Claim 1, **characterized in that** means for detecting a state change inside the sensor and/or actuator (1) are provided, and **in that** the state change is provided as a data item inside one of the data profiles for wireless communication.

3. Sensor and/or actuator according to Claim 1 or 2, **characterized in that** the input of a parameter is provided for the purpose of selecting one of the data profiles.

4. Sensor and/or actuator according to one of the preceding claims, **characterized in that** it has means (7) for detecting the state of the sensor and/or actuator, and **in that** this detected state is provided as a data item inside one of the data profiles for wireless communication.

5. Sensor and/or actuator according to one of the preceding claims, **characterized in that** it has means (8) for receiving data which are individually or jointly provided, directly or after processing, as data inside at least one of the data profiles.

6. Sensor and/or actuator according to one of the preceding claims, **characterized in that** a sequence of a plurality of data profiles can be selected.

7. Sensor and/or actuator according to one of the preceding claims, **characterized in that** the duration of at least one of the data profiles can be individually changed.

## Revendications

1. Capteur et/ou actionneur (1) ayant des moyens (3) de communication sans fil de données,
dans lequel le capteur et/ou l'actionneur (1) a une alimentation (2) en énergie à réservoir d'énergie limité, dans lequel le capteur et/ou l'actionneur (1) est conçu pour la mémorisation de plusieurs profils de données différents, par lesquels respectivement un sous-groupe des données est défini, et dans lequel le profil de données souhaité peut être sélectionné de manière à n'envoyer en fonctionnement au sein d'un réseau par les moyens (3) de communication sans fil que les données de ce sous-groupe sélectionné,
**caractérisé**
**en ce que** le capteur et/ou l'actionneur (1) a une unité (5) de commande, par laquelle le profil de données à utiliser pour la communication peut être sélectionné et/ou modifié en fonctionnement et
**en ce que** le profil de données est prescrit ou modifié par l'unité de commande en fonction de données qui sont détectées par un élément de capteur.

2. Capteur et/ou actionneur (1) suivant la revendication 1, **caractérisé en ce qu'**il est prévu des moyens de détection d'un changement d'état au sein du capteur et/ou de l'actionneur (1) et **en ce que** le changement d'état est prévu comme donnée au sein de l'un des profils de données pour la communication sans fil.

3. Capteur et/ou actionneur (1) suivant la revendication 1 ou 2,
**caractérisé en ce qu'**il est prévu l'entrée d'un paramètre pour la sélection de l'un des profils de données.

4. Capteur et/ou actionneur (1) suivant l'une des revendications précédentes,
**caractérisé en ce que** celui-ci a des moyens (7) de détection de l'état du capteur et/ou de l'actionneur et **en ce que** cet état détecté est prévu comme donnée au sein de l'un des profils de données pour la communication sans fil.

5. Capteur et/ou actionneur (1) suivant l'une des revendications précédentes,
**caractérisé en ce que** celui-ci a des moyens (8) de réception de données, qui sont prévus individuellement ou ensemble, directement ou après le traitement, comme données au sein d'au moins l'un des profils de données.

6. Capteur et/ou actionneur (1) suivant l'une des revendications précédentes,
**caractérisé en ce qu'**une succession de plusieurs profils de données peut être sélectionnée.

7. Capteur et/ou actionneur (1) suivant l'une des revendications précédentes,
**caractérisé en ce que** la durée d'au moins l'un des profils de données peut être modifiée individuellement.
